# EUROPEAN PATENT APPLICATION

(11) **EP 2 808 835 A1**
(43) Date of publication of application: **03.12.2014**
(21) Application number: 13275265.0
(22) Date of filing: 29.10.2013
(51) Int. Cl.: G06Q 10/08, G07C 9/00

(54) **ELECTRONIC TAG REMOTE CONTROL**

(30) Priority: 31.05.2013 KR 20130062957
(71) Applicant: Samsung Electro-Mechanics Co., Ltd., Gyeonggi-do (KR)
(72) Inventor: Kang, Yeon Hee, 443-743 Gyeonggi-do (KR); You, Min Su, 443-743 Gyeonggi-do (KR)
(74) Representative: Powell, Timothy John

(57) **Abstract**

Disclosed herein is a remote control adjusting product information and costs of an electronic tag installed in a guide rail in order to increase portability by integrating a remover key used at the time of installing and separating the electronic tag into the remote control. The remote control includes: a case having a battery received therein; a slide cover coupled to the case so as to prevent separation of the battery; a remover key configured integrally with the slide cover so as to separate the electronic tag from the guide rail; and cover catching holes formed in an inner portion of the case so as to adjust movement of the slide cover stepwise.

## Description

### CROSS REFERENCE(S) TO RELATED APPLICATIONS

This application claims the benefit of Korean Patent Application Serial No. 10-2013-0062957, entitled "Electronic Tag Remote Control" filed on May 31, 2013, which is hereby incorporated by reference in its entirety into this application.

### BACKGROUND OF THE INVENTION

### 1. Technical Field

The present invention relates to an electronic tag remote control, and more particularly, to an electronic tag remote control capable of increasing portability of a remover key by integrating the remover key used at the time of installing and separating the electronic tag into the remote control.

### 2. Description of the Related Art

In order to exhibit and sell a number of products in a predetermined space such as a distribution market, a label displaying information and cost of the products has been used.

In general, the cost displaying label has used in a scheme in which it is attached to a place in the vicinity of displayed product by directly handwriting product information necessary to sell the product, for example, cost and discount information on a paper or printing the product information on the paper so as to conform to a standardized form.

A traditional scheme looks as if it may be simple, convenient, and implemented at low cost, but in the case in which the standardized forms are used for tens of thousands of product items or more as in a large-scaled distribution market and costs are frequently changed, there is a limit as to what an existing paper label scheme is applied.

That is, if changes in costs of some product items among a number of product items have occurred, after a manager summarizes the changed costs and handwrites or prints the product information such as the changed costs, the manager have to go to where the corresponding products are sold and exhibited in the distribution market so as to replace the labels.

Therefore, time and workers for performing the above-mentioned work and replacement whenever the cost information of the product is changed have been required and a need for improving the above-mentioned problems has increased due to nature of the large-scaled distribution market.

In recent, the existing paper label has been significantly replaced with an electronic tag based on the above-mentioned market requirement.

When changing detailed information such as a brand name, costs, or the like on the electronic tag, a remote control is used. The remote control is directly owned by a manager in the distribution market and when changing the corresponding information, the manager presses a switch of the remote control at a position adjacent to the electronic tag so as to change the information.

The above-mentioned electronic tag is inserted into a guide rail of a display stand on which the product is displayed and is then moved along the guide rail so as to be disposed at a center of a place on which the product is placed.

When separating the electronic tag from the guide rail, the electronic tag may be separated from the guide rail by manipulating a stopper installed on a side of the electronic tag using a remover key.

However, the remover key of separating the electronic tag from the guide rail separates the electronic tag from the guide rail by lifting a lower end of the electronic tag in a state in which the remover key is inserted into the stopper of the electronic tag. In this process, a tip of the remover key may be damaged by excessive force of a user.

In addition, since the stopper of the electronic tag is elastically supported by a spring, a position of the electronic tag is adjusted after lifting the stopper using the remover key. However, in this case, it is difficult to finely adjust the position of the electronic tag.

In addition, since the remover key installing and separating the electronic tag has a very small size, there is a risk of missing the remover key. Indeed, most of managers in the distribution market have missed the remover key.

### [Related Art Document]

### [Patent Document]

(Patent Document 1) Cited Reference: Korean Patent Laid-Open Publication No. 2012-0048169

### SUMMARY OF THE INVENTION

An object of the present invention is to provide an electronic tag remote control capable of increasing portability of a remover key by integrating the remover key used at the time of installing and separating the electronic tag into the remote control.

According to an exemplary embodiment of the present invention, there is provided a remote control adjusting product information and costs of an electronic tag installed in a guide rail, the remote control including: a case having a battery received therein; a slide cover coupled to the case so as to prevent separation of the battery; a remover key configured integrally with the slide cover so as to separate the electronic tag from the guide rail; and cover catching holes formed in an inner portion of the case so as to adjust movement of the slide cover stepwise.

The slide cover may have catching protrusions formed at both edges so as to be caught with the cover catching holes and at least a pair of catching protrusions may be formed along both edges.

The cover catching holes are formed in an inner wall surface of the case at predetermined intervals so as to be coupled to the catching protrusion.

The remover key may be configured of a connection part formed integrally with the slide cover and a tag separation piece bent at a predetermined angle at a tip of the connection part.

The tag separation piece may have a groove formed at a central portion thereof and an interval of the groove may be formed so as to be the same as a size of a protruded protrusion configured at the electronic tag.

The connection part may have a rod shape formed so as to have a constant width and the connection part is connected to the slide cover while being tapered.

The slide cover may have a cover movement groove formed in an external surface thereof and the cover movement protrusion may be configured of a plurality of semi-circular protrusions.

### BRIEF DESCRIPTION OF THE DRAWINGS

FIG. 1 is an exploded perspective view showing a state in which a cover of a remote control is separate, according to an exemplary embodiment of the present invention;
FIG. 2 is a perspective view showing the remote control of an electronic tag according to an exemplary embodiment of the present invention;
FIG. 3 is a perspective view showing a state in which a remover key according to an exemplary embodiment of the present invention is slidably moved to one stage in the remote control;
FIG. 4 is a perspective view showing a state in which the remover key according to the exemplary embodiment of the present invention is slidably moved to two-stage in the remote control;
FIG. 5 is a use state view showing a state in which the electronic tag is separated from a guide rail using the remover key according to the exemplary embodiment of the present invention.

### DESCRIPTION OF THE PREFERRED EMBODIMENTS

Hereinafter, exemplary embodiments of the present invention will be described in detail with reference to the accompanying drawings.

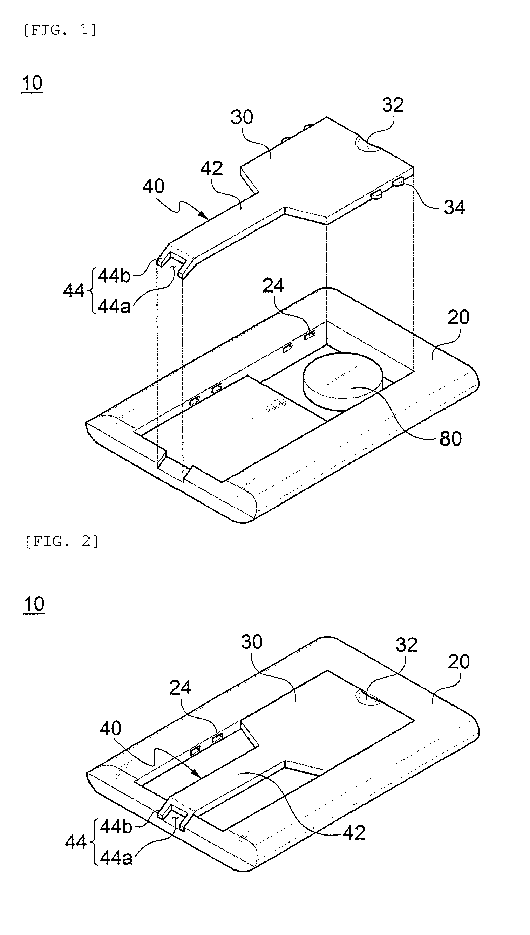

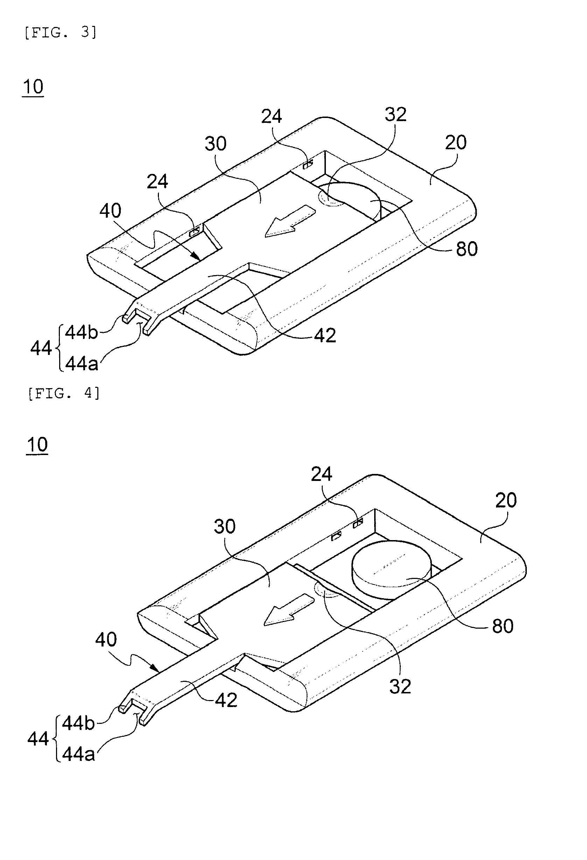

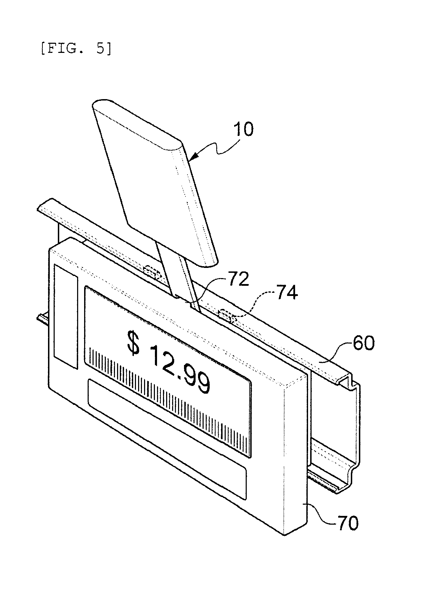

FIG. 1 is an exploded perspective view showing a state in which a cover of a remote control is separate, according to an exemplary embodiment of the present invention, FIG. 2 is a perspective view showing the remote control of an electronic tag according to an exemplary embodiment of the present invention, FIG. 3 is a perspective view showing a state in which a remover key according to an exemplary embodiment of the present invention is slidably moved to one-stage in the remote control, FIG. 4 is a perspective view showing a state in which the remover key according to the exemplary embodiment of the present invention is slidably moved to two-stage in the remote control, and FIG. 5 is a use state view showing a state in which the electronic tag is separated from a guide rail using the remover key according to the exemplary embodiment of the present invention.

As shown, an electronic tag remote control 10 according to an exemplary embodiment of the present invention is used so as to wirelessly control an electronic tag 70 displaying product information and costs in a distribution market.

The electronic tag 70 is inserted into a guide rail 60 configured at a front of a product display stand and has a protruded protrusion 72 and guide protrusions 74 formed on a circumference surface thereof in order to firmly hold a state in which the electronic tag 70 is coupled to the guide rail 60.

In this case, when the electronic tag 70 is installed in the guide rail 60 and is then separated from the guide rail 60, a remover key 40 is used.

The remover key 40 according to the exemplary embodiment of the present invention is configured integrally with the remote control 10, thereby making it possible to increase missing prevention and portability of the remover key 40.

The remote control 10 according to the exemplary embodiment of the present invention includes a case 20 having a battery received therein, a slide cover 30 coupled to the case 20 so as to prevent separation of the battery 80, a remover key 40 configured integrally with the slide cover 30, and a cover catching hole 24 formed in the case so as to adjust a movement of the cover 30 stepwise.

The case 20, which is manufactured by injecting synthetic resin, has an entire appearance changeable according to design requirements and may be configured approximately in a rectangular shape.

Although not shown in the drawings, the case 20 has a printed circuit board and a connection terminal formed in an inner portion thereof so that a circular battery 80 may be mounted thereon.

In addition, the slide cover 30 is coupled to the case so that the circular battery 80 is not moved or separated from the inner portion of the case 20 after the circular battery 80 is mounted in the inner portion of the case 20.

The slide cover 30 opens and closes the inner portion of the case 20 according to the slide movement thereof. In this case, the slide cover 30 has a cover movement groove 32 formed in an external surface thereof, such that a user may conveniently move the slide cover 30.

The cover movement groove 32 may be configured so as to have a predetermined depth or may also be configured in a serration shape.

In addition, the slide cover 30 has the remover key 40 formed integrally therewith. The remover key 40 includes a connection part 42 and a tag separation piece 44 bent at a predetermined angle at a tip of the connection part 42.

The connection part 42 may have a rod shape configured so as to have a constant straight line width at a central position of the slide cover 30 or may be configured in a triangular shape tapered from the slide cover 30.

The exemplary embodiment of the present invention shows a shape of the connection part 42 configured in the rod shape.

The tag separation piece 44 formed at the tip of the connection part 42 has a shape bent at a predetermined angle and the bent angle may have a range less than 90°. In the case in which the bent angle is configured so as to exceed 90°, it is difficult for the remover key 40 to closely adhere to an edge of the case 20 and efficiency may be degraded when the electronic tag 70 is separated from the guide rail 60.

In addition, the tag separation piece 44 may have a groove 44a formed at a central portion thereof. An interval of the groove 44a may be configured so as to be the same as or larger than a size of the protruded protrusion 72 configured at the electronic tag 70.

In addition, the tip part of the tag separation piece 44 may be provided with an inclined surface 44b formed so as to have a thickness that becomes thin toward the tip part. The inclined surface 44 is configured so that the tag separation piece 44 may be further conveniently inserted into between the guide rail 60 and the electronic tag 70 when the electronic tag 70 is separated from the guide rail 60.

Meanwhile, the inner portion of the case 20 may be provided with the cover catching hole 24 so that the movement of the slide cover 30 is adjusted stepwise. The cover catching hole 24 may be formed on a moving path of the slide cover 30 and at least a pair of cover catching holes 24 are formed along inner wall surfaces facing each other in the inner portion of the case 20.

In this case, the cover catching holes 24 may be formed at a position at which the slide cover 30 is closed, a position at which the slide cover 30 partially closes the circular battery 80, and a position at which the circular battery 80 is completely exposed, respectively.

The slide cover 30 may have catching protrusions 34 formed at both edges thereof so that the position of the slide cover 30 is adjusted along the moving path by the cover catching hole 24 stepwise.

At least a pair of catching protrusions 34 may be formed at both edges of the slide cover 30, respectively.

By manipulating the electronic tag remote control 10 according to the exemplary embodiment of the present invention configured as described above, product costs, information, or the like on the electronic tag 70 installed in the guide rail of the distribution market are changed.

Thereafter, in the case in which the electronic tag 70 needs to be separated from the guide rail 60, the connection part 42 and the tag separation piece 44 of the remover key are separated from the case 20 by moving the slide cover 30 of the remote control 10.

In this case, the position of the slide cover 30 has a state in which the circular battery 80 received in the inner portion of the case 20 is partially closed and a state in which the catching protrusion 34 is caught with the cover catching hole 24, such that it is difficult to easily move the slide cover 30.

In this state, the groove 44a is inserted into the protruded protrusion 72 of the electronic tag and the inclined surface 44b is inserted between the guide rail 60 and the electronic tag 70.

After the tag separation piece 44 is inserted between the guide rail 60 and the electronic tag 70 as described above, the remote control 10 is vertically pressed using a principal of a lever. Once the electronic tag 70 is separated from the guide rail 60 by pressing the remote control 10, the electronic tag 70 may be conveniently taken out from the guide rail 60.

In addition, in the case in which the circular battery 80 received in the case 20 is replaced in the case 20, the slide cover 30 is pushed as much as possible so that the catching protrusion 34 is caught with the cover catching hole 24 at an outer side of the case.

Once the catching protrusion 34 is caught with the cover catching hole 24, the slide cover 30 completely exposes the circular battery 80, such that the circular battery 80 may be conveniently replaced.

Therefore, the electronic tag remote control 10 according to the exemplary embodiment of the present invention may perform manipulation of the electronic tag 70, may conveniently and quickly separate the electronic tag 70 from the guide rail 60 using the remover key 40, and may stably carry the remover key 40 while not missing.

The electronic tag remote control according to the exemplary embodiment of the present invention may increase portability and storage performance of the remover key by integrating the remover key used at the time of installing and separating the electronic tag into the remote control.

Although the electronic tag remote control according to the exemplary embodiment of the present invention has been described, the present invention is not limited thereto, but those skilled in the art will appreciate that various applications and modifications are possible.

## Claims

1. A remote control adjusting product information and costs of an electronic tag installed in a guide rail, the remote control comprising:
a case having a battery received therein;
a slide cover coupled to the case so as to prevent separation of the battery;
a remover key configured integrally with the slide cover so as to separate the electronic tag from the guide rail; and
cover catching holes formed in an inner portion of the case so as to adjust movement of the slide cover stepwise.

2. The electronic tag remote control according to claim 1, wherein the slide cover has catching protrusions formed at both edges so as to be caught with the cover catching holes.

3. The electronic tag remote control according to claim 1, wherein the cover catching holes are formed in an inner wall surface of the case at predetermined intervals.

4. The electronic tag remote control according to claim 1, wherein the remover key is configured of a connection part formed integrally with the slide cover and a tag separation piece bent at a predetermined angle at a tip of the connection part.

5. The electronic tag remote control according to claim 4, wherein the tag separation piece has a groove formed at a central portion thereof.

6. The electronic tag remote control according to claim 4, wherein the connection part has a rod shape formed so as to have a constant width.

7. The electronic tag remote control according to claim 4, wherein the connection part is connected to the slide cover while being tapered.

8. The electronic tag remote control according to claim 4, wherein the tag separation piece has an inclined surface having a thickness that becomes thin toward the tip.

9. The electronic tag remote control according to claim 1, wherein the slide cover has a cover movement groove formed in an external surface thereof.

10. The electronic tag remote control according to claim 1, wherein the cover movement protrusion is configured of a plurality of semi-circular protrusions.
